(19) Europäisches Patentamt
European Patent Office
Office européen des brevets

(11) **EP 1 566 213 A1**

(12) **DEMANDE DE BREVET EUROPEEN**

(43) Date de publication:
**24.08.2005 Bulletin 2005/34**

(21) Numéro de dépôt: **05290311.9**

(22) Date de dépôt: **11.02.2005**

(51) Int Cl.[7]: **B01J 20/10**, B01D 15/00, B01J 20/26, B01J 20/28, B01J 20/30

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **12.02.2004 FR 0401386**

(71) Demandeur: **Commisariat à l'énergie Atomique**
**75015 Paris 15ème (FR)**

(72) Inventeur: **Vigneau, Olivier Le Clos Elisabeth**
**91190 Gif S/Yvette (FR)**

(74) Mandataire: **Ahner, Francis et al**
**Cabinet Régimbeau**
**20, rue de Chazelles**
**75847 Paris cedex 17 (FR)**

# (54) Gel hybride organique-inorganique imprimé comprenant un complexant organique mettant en jeu des interactions

(57) La présente invention concerne un procédé de préparation par voie sol-gel d'un gel hybride organique-inorganique imprimé comprenant un complexant organique mettant en jeu des interactions π-π et/ou π-n avec des molécules organiques acceptrices d'électrons n ou π, caractérisé en ce qu'il comprend a) la polymérisation par polycondensation, en présence d'eau, d'au moins un alcoxyde métallique fonctionnalisé de formule (I), en présence d'un alcoxyde métallique choisi parmi les alcoxydes métalliques de formule (II) ou (III) ou leurs

$$L\text{-}(CH_2)_x\text{—}M(OR^1)_n \qquad (I)$$

mélanges : $M(OR^2)_m$ (II) ,$(R^3)_yM(OR^2)_z$ (III) dans lesquelles soit M est identique dans chacune des formules I, II et III et représente Si, Ti, Zr ou Al, avantageusement Si, soit M représente Si ou Al dans chacune des formules I, II et III, n=3 lorsque M représente Si, Ti ou Zr ou n=2 lorsque M représente Al, m=4 lorsque M représente Si, Ti ou Zr ou m=3 lorsque M représente Al, y+z=4 et z est au moins égal à 2 lorsque M représente Si, Ti ou Zr ou y+z=3 et z est au moins égal à 2 lorsque M représente Al, $R^1$ et $R^2$ représentent indépendamment l'un de l'autre un groupe alkyle en $C_1$-$C_{12}$, avantageusement un groupe méthyle et/ou éthyle, $R^3$ représente un groupe alkyle en $C_1$-$C_{12}$, un groupe aryle ou arylalkyle, avantageusement un groupe méthyle, x= 0 à 12, L représente un groupe organique comprenant une fonction organique complexante pouvant former des interactions π-π et/ou π-n avec des molécules organiques acceptrices d'électrons n ou π et en présence d'un gabarit constitué par une molécule organique acceptrice d'électrons n ou π, le rapport de la concentration en composé de formule (I) / la concentration en composés de formules (II) et (III) est d'au moins 1/10, b) lavage du gel hybride obtenu à l'étape a) afin de supprimer le gabarit.



Printed by Jouve, 75001 PARIS (FR)

## Description

La présente invention concerne la fabrication de gels hybrides organique - inorganiques imprimés par voie sol-gel et leur utilisation pour la séparation, l'extraction et la détection (sous forme de capteur chimique) d'espèces chimiques comportant des groupements électro-attracteurs, tels que le 2,4-dinitrotoluène (DNT) et le 1,3-dinitrobenzène (DNB).

Différents procédés d'extraction de composés aromatiques, contenant éventuellement des hétéroatomes, à l'aide d'un agent complexant à base d'un accepteur d'électrons π sont décrits dans les brevets WO 02/24836 et WO 02/24837. Ces procédés ont pour but la déazotation et la désulfuration de coupes pétrolières par extraction des composés polyaromatiques tels que les dérives du thiophène, notamment le dibenzothiophène et ses dérivés, ou encore les composés azotés de type pyrrole, indole, carbazole et leurs dérivés. La présence de ce type de composés dans les combustibles est généralement peu souhaitable car ils sont source de pollution de l'atmosphère (oxydes de soufre, générateurs de pluies acides et oxydes d'azote ou de carbone, responsables de l'augmentation de la température du globe et de la détérioration de la couche d'ozone). Les matériaux utilisés possèdent un complexant sélectif pour tout composé riche en électrons π ou n mais ils ne possèdent pas de porosité contrôlée. Ils ne sont donc pas capables de discriminer des composés faisant partie d'une même famille mais possédant des encombrements stériques différents.

L'utilisation de matériaux sol-gel est couramment utilisée pour l'extraction de cations métalliques. Ainsi, le brevet FR 2 770 153 décrit l'utilisation de matériaux sol-gel hybrides inorganiques-organiques synthétisés selon la technique de l'empreinte moléculaire pour l'extraction de cations métalliques tels que les lanthanides et les actinides. L'entité extractante, pouvant être en particulier des groupes amino, éther, hydroxy, amido, pyridino ou bipyridino, est intégrée dans la structure du gel lors de sa fabrication, chaque molécule organique complexante étant liée de façon covalente à un ou plusieurs atomes du réseau. Toutefois, le procédé utilisé est catalysé par le composé nucléophile fluorure d'ammonium, ce qui entraîne des répercussions sur la structure du matériau obtenu(B Boury et al, New J. Chem. 1999, 23, 531-538). En outre, seule l'utilisation du matériau pour l'extraction en milieu aqueux est décrite.

Le brevet US 6,057,377 décrit l'utilisation de matériaux sol-gel hybrides, synthétisés selon le procédé de l'empreinte moléculaire, pour l'extraction sélective d'acide phénylphosphonique utilisé comme molécule gabarit. Le monomère complexant, le chlorure de 3-méthoxypropyl-1-guanidine, est intégré de façon covalente au sol-gel lors de sa fabrication ; la complexation s'effectuant par des interactions de type liaison hydrogène et non de type π-π et/ou π-n. L'extraction de l'acide phénylphosphonique est favorisée par à rapport celle du diisopropylphenylphosphonate. L'accessibilité aux sites complexants est gérée par la porosité du matériau sol-gel.

Le brevet US 6,251,280 décrit l'utilisation de matériaux sol-gel mésoporeux couplés à l'introduction dans le gel d'une molécule complexante élaborés selon la technique de l'empreinte moléculaire pour la séparation et la détection de métaux toxiques et de molécules variées (herbicides, aminoacides, drogues, explosifs...). Parmi ces molécules les inventeurs revendiquent la détection du trinitrotoluène. Les molécules complexantes utilisées ne semblent pouvoir interagir avec la molécule cible que par des liaisons datives et liaison hydrogène et non par des interactions de type π-π et/ou π-n. Une liaison dative est une liaison covalente dans laquelle le doublet électronique entre les 2 atomes est apporté par l'un des 2 atomes. Une liaison de typeπ-π et/ou π-n n'est pas une liaison covalente, elle correspond à un recouvrement orbitalaire. En outre, le matériau mésoporeux est fabriqué avant l'introduction de la molécule complexante et non in situ. Le procédé utilisé est donc complexe et long. La structure du matériau obtenu est fortement dépendante du procédé utilisé.

Les composés nitrés tels que le 2,4-dinitrotoluène (DNT) et le 1,3-dinitrobenzène (DNB) sont des produits pouvant inhiber la polymérisation par voie radicalaire qui est un mode de polymérisation couramment utilisé dans la technique de l'empreinte moléculaire.

Les inventeurs ont découverts de façon surprenante qu'il était possible de fabriquer un gel hybride organique - inorganique imprimé possédant au moins un complexant organique mettant en jeu des interactions de type π-π et/ou π-n avec d'autres molécules organiques acceptrices d'électrons n ou π par un procédé de type sol-gel. La stoechiométrie et la structure moléculaire du solide peuvent ainsi être précisément contrôlées. La porosité des matériaux et le groupement organique complexant peuvent être modifiés afin de s'adapter aux produits d'intérêt. Cette technique a pour avantages d'être une méthode de synthèse chimique d'oxydes métalliques par voie douce et de permettre la synthèse de gel de porosité définie et contrôlée. Elle permet aussi, lors de la fabrication du gel, l'incorporation in situ de composé organique complexant.

La présente invention concerne un procédé de préparation par voie sol-gel d'un gel hybride organique - inorganique imprimé possédant au moins un complexant organique mettant en jeu des interactions de type π-π et/ou π-n avec d'autres molécules organiques acceptrices d'électrons n ou π, caractérisé en ce qu'il comprend

a) la polymérisation par polycondensation, en présence d'eau, sans catalyseur, d'au moins un alcoxyde métallique fonctionnalisé de formule (I), en présence d'un alcoxyde métallique choisi parmi les alcoxydes métalliques de formule (II) ou les alcoxydes métalliques fonctionnalisés de formule (III) ou leurs mélanges :

$$L\text{-}(CH_2)_x\text{-}M(OR^1)_n \qquad (I)$$

$$M(OR^2)_m \qquad (II)$$

$$(R^3)_yM(OR^2)_z \qquad (III)$$

dans lesquelles soit M est identique dans chacune des formules I, II et III et représente Si, Ti, Zr ou Al, avantageusement Si, soit M représente Si ou Al dans chacune des
formules I, II et III,
n=3 lorsque M représente Si, Ti ou Zr ou n=2 lorsque M représente Al,
m=4 lorsque M représente Si, Ti ou Zr ou m=3 lorsque M représente Al,
y+z=4 et z est au moins égal à 2 lorsque M représente Si, Ti ou Zr ou y+z=3 et z est au moins égal à 2 lorsque M représente Al,
$R^1$ et $R^2$ représentent indépendamment l'un de l'autre un groupe alkyle en $C_1$-$C_{12}$, avantageusement un groupe méthyle et/ou éthyle,
$R^3$ représente un groupe alkyle en $C_1$-$C_{12}$, un groupe aryle ou arylalkyle, avantageusement un groupe méthyle,
x= 0 à 12, de préférence, x = 3,
L représente un groupe organique comprenant au moins une fonction organique complexante pouvant former des interactions de type π-π et/ou π-n avec d'autres molécules organiques acceptrices d'électrons n ou π,
et en présence d'un gabarit constitué par une molécule organique acceptrice d'électrons n ou π et pouvant former un complexe avec la fonction organique complexante du groupe organique L,
le rapport de la concentration en composé de formule (I) / la concentration en composés de formules (II) et (III) est d'au plus 1/5, avantageusement d'environ 1/50,
b) lavage du gel hybride obtenu à l'étape a) afin de supprimer le gabarit.

La concentration en composé (I) dans le matériau est toujours inférieure à celle des composés (II) et (III). En effet, la nécessité de former une cage rigide autour du complexe ligand/gabarit au moment de la formation du matériau implique une forte concentration en composés (II) et (III) par rapport au composé (I).

On entend au sens de la présente invention par « goupe aryle », tout groupe aromatique en $C_4$-$C_{12}$. Avantageusement il s'agit d'un groupe phényle.

On entend au sens de la présente invention par « goupe arylalkyle », tout groupe aryle tel que défini ci-dessus lié par l'intermédiaire d'un groupe alkyle en $C_1$-$C_6$. Avantageusement il s'agit d'un groupe benzyle.

De façon avantageuse, la polymérisation de l'étape a) se fait en présence d'un mélange d'alcoxydes métalliques de formule (II) et d'alcoxydes métalliques fonctionnalisés de formule (III).

Avantageusement la fonction organique complexante du groupe organique L est une fonction poly ou monoaromatique substituée par un ou plusieurs groupements donneurs d'électrons π ou n.

De façon encore plus avantageuse, le groupe L est choisi dans le groupe constitué par l'indole, le carbazole, le pyrrole, l'acridine, la quinoline, l'anthracène, le benzothiophène, le dibenzothiophène, le groupe de formule

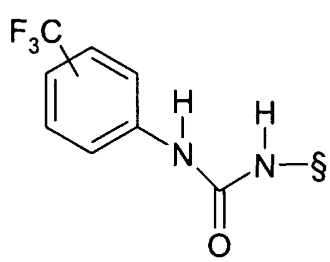

,

un de leur dérivé ou leur mélange.

Dans un mode particulier de réalisation de l'invention, l'alcoxyde métallique fonctionnalisé de formule (I) est choisi dans le groupe constitué par

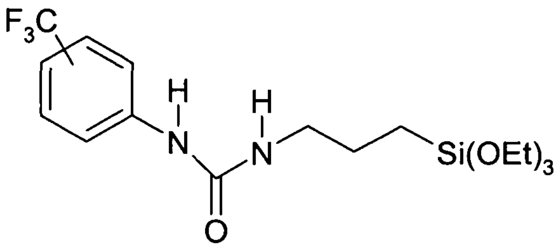 , 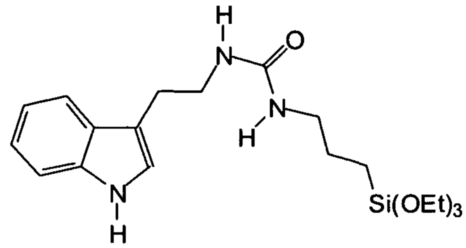

et

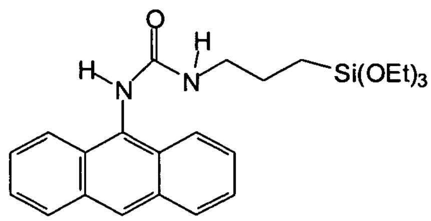

Avantageusement, $R^3$ représente un groupe méthyle, éthyle, octyle, benzyle ou phényle. Avantageusement, il s'agit d'un groupe méthyle.

Dans un mode de réalisation avantageux, le gabarit est choisit dans le groupe constitué par les molécules aromatiques comportant des groupements électro-attracteurs directement attachées au noyau, avantageusement des groupements du type -COOH, halogéno, cyano, etc....

De façon avantageuse, le gabarit est choisit dans le groupe constitué par l'acide picrique, les composés halogénoaromatiques tels que par exemple le dichlorobenzène et le tétrachlorobenzène, le dicyanobenzène, le tétracyanobenzène, le DNT ou le DNB. Avantageusement, il s'agit du DNT ou du DNB.

Dans un mode de réalisation avantageux de l'invention, l'étape b) de lavage est réalisé avec un solvant approprié, i.e. pouvant casser les interactions mises en jeu lors de la complexation et solubilisant le gabarit immobilisé dans le matériau. De façon avantageuse, il s'agit du toluène ou de l'acétonitrile. Cette étape de lavage permet, outre de supprimer le gabarit, d'éliminer les monomères n'ayant pas réagi. Avantageusement cette étape à lieu après l'étape de mûrissement, de séchage et de broyage du gel.

Avantageusement, le groupe de formule II est le tétraméthoxysilane TMOS. De façon avantageuse, le groupe de formule III est le méthyltriméthoxysilane MeTMOS. Avantageusement, les groupes de formule II et III sont choisis dans le groupe constitué par le phényltriéthoxysilane, le phényltriméthoxysilane, le benzyltriméthoxysilane, le benzyltriéthoxysilane, l'octyltriméthoxysilane, le méthyloctyldiméthoxysilane, le propyltriméthoxysilane ou leurs mélanges.

Pour mettre en oeuvre le procédé de préparation du gel hybride de l'invention, on dissout généralement les alcoxydes métalliques dans un solvant approprié. Avantageusement, il s'agit d'un solvant organique miscible à l'eau, de façon avantageuse choisi dans le groupe constitué par le tétrahydrofurane et un alcool, avantageusement l'éthanol. Puis on ajoute de l'eau pour démarrer le phénomène de condensation.

Les quantités de solvant sont généralement telles qu'elles correspondent à 0,5 à 1 ml de solvant par mmol de métal et la quantité d'eau ajoutée doit correspondre à au moins 0,5 équivalent d'eau par groupement alcoxy $OR^1$ et éventuellement $OR^2$ et $OR^3$ présente dans les alcoxydes métalliques utilisés.

On peut effectuer la réaction à la température ambiante, sous agitation, en laissant reposer ensuite le milieu réactionnel jusqu'à la gélification (pour une période de mûrissement, avantageusement de l'ordre de quelques heures à plusieurs jours, de façon encore plus avantageuse de l'ordre de 3 à 4 jours) puis en laissant vieillir pendant par exemple une semaine.

Dans un mode de réalisation avantageux, l'alcoxyde métallique de formule (II) ou (III) ou leur mélange est solubilisé dans un solvant approprié, avantageusement l'éthanol, puis de l'eau distillée est ajoutée. Après mélange, l'alcoxyde métallique fonctionnalisé de formule (I) est introduit. Le gabarit est ensuite ajouté à la solution. La solution limpide est agitée puis versée dans un tube plastique. Le pH de cette solution est avantageusement faiblement acide ou neutre, de façon encore plus avantageuse comprise dans la gamme 4,5-5. Le mélange est stocké hermétiquement à 25°C pour une période de mûrissement, avantageusement de l'ordre de quelques heures à plusieurs jours, de façon encore plus avantageuse de l'ordre de 3 à 4 jours. Le gel formé est ensuite laissé séché à l'air, à la température

ambiante, durant 3-4 semaines. Il est ensuite broyé puis lavé avec un solvant approprié, avantageusement de l'acétonitrile. Ce lavage permet d'éliminer le gabarit mais également les monomères n'ayant pas réagi. Le matériau est ensuite séché sous vide durant 12h.

La présente invention concerne également un gel hybride organique - inorganique imprimé, possédant au moins un complexant organique mettant en jeu des interactions de type $\pi$-$\pi$ et/ou $\pi$-n avec d'autres molécules organiques acceptrices d'électrons n ou $\pi$, susceptible d'être obtenu par le procédé selon la présente invention.

Le gel hybride inorganique-organique comprend un réseau de motifs inorganiques dans lequel sont intégrés les complexants organiques L pouvant extraire les produits d'intérêts, chaque molécule organique étant fixée de façon covalente à un ou plusieurs atomes du réseau. Dans le gel de l'invention, les motifs inorganiques peuvent être du type gel de silice, gel d'oxyde de titane, gel d'oxyde de zirconium ou gel d'alumine.

La présente invention concerne en outre l'utilisation du gel hybride organique-inorganique imprimé selon la présente invention pour la séparation, l'extraction ou la détection d'espèces chimiques comportant des groupements accepteurs d'électrons n ou $\pi$, avantageusement choisies dans le groupe constitués par le DNT ou le DNB.

Dans un mode de réalisation avantageux, les espèces chimiques à extraire, séparer ou détecter sont choisis dans le groupe constitué par les molécules aromatiques comportant des groupements électro-attracteurs directement attachées au noyau, avantageusement des groupements du type -COOH, halogéno, cyano, etc....

De façon avantageuse, les espèces chimiques à extraire, séparer ou détecter sont choisis dans le groupe constitué par l'acide picrique, les composés halogénoaromatiques tels que par exemple le dichlorobenzène et le tétrachlorobenzène, le dicyanobenzène, le tétracyanobenzène, le DNT ou le DNB. Avantageusement, il s'agit du DNT ou du DNB.

Actuellement la limite de détection des espèces chimiques selon la présente invention est due à l'appareil de chromatographie qui est utilisé pour détecter la présence du DNT en solution après extraction. Typiquement des concentrations de $1x10^{-6}$ $mol.L^{-1}$ peuvent être détectées ce qui veut dire que le matériau peut de façon avantageuse extraire des solutions ayant des concentrations allant de $1x10^{-3}$ $mol.L^{-1}$ à $1x10^{-6} mol.L^{-1}$.

Le DNT ou le DNB sont des produits secondaires de la synthèse du 2,4,6-trinitrotoluène (TNT) qui est l'explosif le plus utilisé. Une quantité non négligeable de ses produits (plusieurs % en masse) reste mélangée au TNT. Le 2,4-dinitrotoluène et le 1,3-dinitrobenzène ont une tension de vapeur bien supérieure à celle du TNT et sont stables dans l'environnement ce qui permet leur détection dans l'atmosphère.

Avantageusement, il s'agit d'une extraction sélective du DNT par rapport aux interférents du 2,4-dinitrotoluène (DNT). Ces interférents sont les suivants :

- le 2,6-di-*t*-butyltoluène (DitBuT),
- le décane ($C_{10}$),
- le nitrobenzène (NBz),
- le 4-nitrobiphényl (4NBiPh),
- le 4-nitro-bromobenzyl (4NBzBr),
- le 5-méthyl-2-nitroanisole (5M2A),
- le 1,3-dinitrobenzène (DNB).

Avantageusement, il s'agit d'une extraction en phase liquide ou gazeuse.

Avantageusement, le gel hybride organique- inorganique imprimé selon la présente invention est utilisé dans un procédé d'extraction en phase liquide par mise en contact de la solution contenant le composé à extraire avec le gel, suivie de la séparation du gel ayant fixé le composé à extraire.

Lorsqu'on utilise un gel sous forme granulaire, le procédé d'extraction correspond à une chromatographie d'extraction et il peut être mis en oeuvre dans une colonne remplie du gel granulaire.

Dans le cas où le gel est sous forme de couche mince, on peut réaliser l'extraction par une technique de séparation membranaire en mettant en circulation d'un côté de la membrane la solution aqueuse contenant les molécules à extraire et de l'autre côté de la membrane, une solution aqueuse de réextraction. L'extraction est également possible en phase gazeuse car la complexation est principalement basée sur des effets stériques (toutefois des interactions pi-pi et pi-n existent également).

De façon avantageuse, l'espèce chimique extraite est relarguée en vue de sa caractérisation. Ce relargage peut être réalisée par différents moyens (chauffage et utilisation d'un gaz neutre pour aider à la désorption du gel tel que l'azote ou l'hélium).

Les exemples qui suivent, donnés à titre indicatifs non limitatifs, illustrent la synthèse de gels hybrides conformes à l'invention et leur utilisation pour l'extraction, la complexation et la détection d'espèces chimiques comportant des groupements attracteurs d'électrons.

Pour la synthèse des alcoxysilanes fonctionnalisés, toutes les manipulations sont effectuées sous atmosphère d'argon. Les solvants sont anhydres et les réactifs sont commerciaux.

**Exemple 1 : Synthèse du monomère 1 (N-3-trifluorométhylphényl-N'*n*-propyl-3-triéthoxysilylurée)**

Dans un tricol de 50mL, 15mL de tétrahydrofurane et 1g (4 $10^{-4}$ moles) d'isocyanatopropyl-triéthoxysilane sont introduits. Ensuite, 651 mg (4 $10^{-4}$ moles) de trifluorométhylaniline sont incorporés goutte à goutte au milieu réactionnel. La solution est alors agitée et chauffée au reflux. La disparition de la trifluorométhylamine est suivie par chromatographie en couche mince CCM : gel de silice, $CH_2Cl_2$). Une fois que toute la trifluorométhylamine a été consommée, le solvant est éliminé sous vide. Un solide blanc est obtenu (rendement quantitatif).

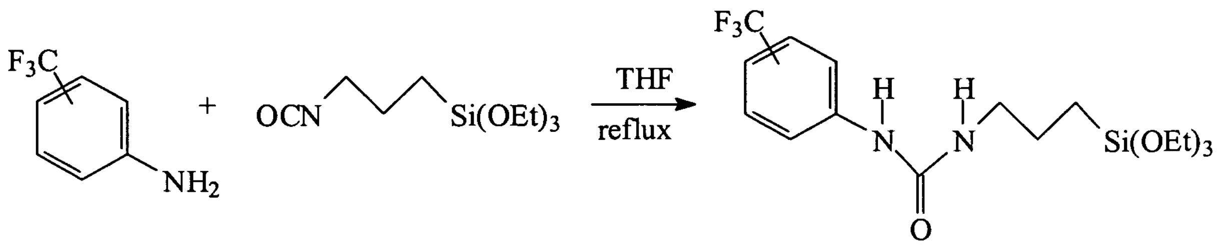


Analyse IR (KBr; $cm^{-1}$): 3350 (NH); 3100 ($CH_{aro}$); 2980 ($CH_3$); 2930 ($CH_2$); 2885 ($CH_2$); 1656 (C=O); 1560 (CNH); 1342 (CN); 1260 (CF); 1170 (CF); 1080 (SiO); 957 ($CH_{aro}$); 875 ($CH_{aro}$); 790 (CF)

Les exemples qui suivent, illustrent l'élaboration des gels de silice hybrides conformes à l'invention. Les matériaux sont synthétisés par hydrolyse et polycondensation des alcoxysilanes tels que le tétraméthoxysilane (TMOS), le méthyltriméthoxysilane (MeTMOS) et le composé **1** (N-3-trifluorométhylphenyl-N'*n*-propyl-3-triethoxysilylurée), en présence d'eau et d'éthanol (sans catalyseur). Dans un premier temps le TMOS est solubilisé dans de l'éthanol puis de l'eau distillée est ajoutée. Après mélange, le composé 1 est introduit. Du DNT est ajouté à la solution. Du MeTMOS peut aussi être éventuellement ajouté. La solution limpide est agitée puis versée dans un tube plastique. Le mélange est stocké hermétiquement à 25°C pour une période de mûrissement de 3 à 4 jours. Le gel formé est ensuite laissé séché à l'air, à la température ambiante, durant 3-4 semaines. Il est ensuite broyé puis lavé avec de l'acétonitrile à l'aide d'un soxhlet afin d'éliminer le DNT. Le matériau est ensuite séché sous vide durant 12h.
Le composé 1 ne doit pas être le seul monomère organique-inorganique mis en oeuvre dans le cadre du procédé sol-gel afin que le matériau que l'on souhaite obtenir préserve ses propriétés complexantes. Ainsi, dans les exemples qui suivent, le TMOS et/ou le MeTMOS accompagnent toujours le composé 1.

**Exemple 2 : Préparation du gel de silice hybride imprimé 2a**

Les réactifs utilisés sont les suivantes :

1,52 g de TMOS (10 x $10^{-3}$ mol)
735 mg d'eau
1,88 g d'éthanol
38 mg de DNT (2,1 x $10^{-4}$ mol)
87 mg de produit 1 (2,1 x $10^{-4}$ mol)

On obtient une poudre blanche
Analyse IR (KBr, $cm^{-1}$) : 3430 (NH + OH); 1652 (C=O); 1565 (CNH); 1342 (CN); 1087 (SiO); 950 ($CH_{aro}$); 800 ($CH_{aro}$)

**Exemple 3 : Préparation du gel de silice hybride imprimé 2b**

Les réactifs utilisés sont les suivants :

1,37 g de TMOS (9 x $10^{-3}$ mol)
138 mg de MeTMOS (1 x $10^{-3}$ mol)
735 mg d'eau
1,88 g d'éthanol
38 mg de DNT (2,1 x $10^{-4}$ mol)
87 mg de produit 1 (2,1 x $10^{-4}$ mol)

On obtient une poudre blanche
Analyse IR (KBr, $cm^{-1}$) : 3430 (NH + OH); 1651 (C=O); 1564 (CNH); 1341 (CN); 1087 (SiO); 949 ($CH_{aro}$); 800 ($CH_{aro}$)

**Exemple 4 : Préparation du gel de silice hybride imprimé 2c**

Les réactifs utilisés sont les suivants :

1,37 g de TMOS (5 x $10^{-3}$ mol)
138 mg de MeTMOS (5 x $10^{-3}$ mol)
735 mg d'eau
1,88 g d'éthanol
38 mg de DNT (2,1 x $10^{-4}$ mol)
87 mg de produit 1 (2,1 x $10^{-4}$ mol)

On obtient une poudre blanche
Analyse : IR (KBr, $cm^{-1}$) : 3430 (NH + OH); 1650 (C=O); 1564 (CNH); 1342 (CN); 1087 (SiO); 950 ($CH_{aro}$); 800 ($CH_{aro}$)

**Exemple 5 : Préparation du gel de silice hybride imprimé 2d**

Les réactifs utilisés sont les suivants :

1,36 g de TMOS (10 x $10^{-3}$ mol)
735 mg d'eau
1,88 g d'éthanol
38 mg de DNT (2,1 x $10^{-4}$ mol)
87 mg de produit 1 (2,1 x $10^{-4}$ mol)

On obtient une poudre blanche
Analyse IR (KBr, $cm^{-1}$) : 3430 (NH + OH); 1651 (C=O); 1565 (CNH); 1342 (CN); 1089 (SiO); 949 ($CH_{aro}$); 800 ($CH_{aro}$)

**Exemple 6 : test en extraction compétitive avec les gels hybrides imprimés (2a, 2b, 2c, 2d)**

Les tests en extraction compétitive se déroulent selon le protocole expérimental suivant :
20 mg de matériaux hybrides imprimés (2a, 2b, 2c, 2d) sont introduits dans un pilulier en verre puis 1 mL de solution d'heptane contenant du DNT et un interférent, est ajouté. La concentration en chaque produit dans la solution est égale à 1x$10^{-4}$ mol.$L^{-1}$. Le pilulier est alors agité sur une table vibrante jusqu'à atteindre l'équilibre thermodynamique du système. Ensuite, les solutions avant extraction compétitive et après extraction compétitive (respectivement $C_i$ et $C_f$) sont analysée par chromatographie gazeuse.

<u>Conditions analytiques :</u>

- Colonne Varian CPSil5-CB wide bore (longueur 15m, diamètre interne 0,53mm, épaisseur de film 3μm),
- température injecteur 260°C
- température détecteur FID 260°C
- four 80°C à 200°C maintenu 5min avec une pente de 10°C/min.

Les interférents du 2,4-dinitrotoluène (DNT) utilisés lors de l'extraction compétitive sont les suivants :

- le 2,6-di-*t*-butyltoluène (DitBuT),
- le décane ($C_{10}$),
- le nitrobenzène (NBz),
- le 4-nitrobiphényl (4NBiPh),
- le 4-nitro-bromobenzyl (4NBzBr),
- le 5-méthyl-2-nitroanisole (5M2A),
- le 1,3-dinitrobenzène (DNB).

Leurs formules développées sont rassemblées dans le tableau 1 ci-après.

Tableau 1 : liste des interférents et de leurs formules développées

| Interférents | Formule développée |
|---|---|
| 2,6-di-*t*-butyltoluène (DitBuT) | 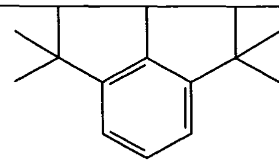 |
| décane ($C_{10}$) | $H_3C-(CH_2)_8-CH_3$ |
| nitrobenzène (NBz) | 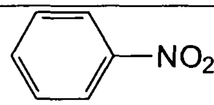 |
| 4-nitrobiphényl (4NBiPh) | 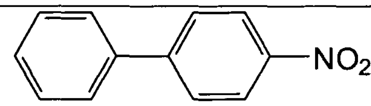 |
| 4-nitro-bromobenzyl (4NBzBr) | 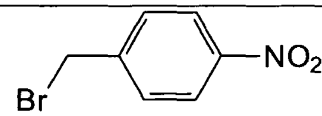 |
| 5-méthyl-2-nitroanisole (5M2A) | 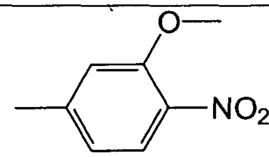 |
| 1,3-dinitrobenzène (DNB) | 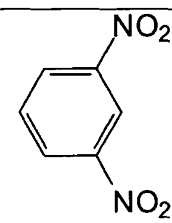 |

Les matériaux sont évalués en fonction de leur capacité à extraire le DNT vis à vis de chaque interférent. Les pourcentages d'extraction, calculés d'après $C_i$ et $C_f$ (concentrations mesurées par chromatographie en phase gazeuse de chaque produit avant et après extraction, exemple ci-dessous pour un produit A), sont déterminés par l'équation suivante :

$$E_A(\%)=\frac{C_i^A - C_f^A}{C_i^A}\times 100$$

Les résultats des tests en extraction compétitive avec les matériaux sol-gel imprimés au DNT (2a, 2b) sont regroupés dans les tableaux 2 à 8 suivants :

Tableau 2 : extraction compétitive DNT/DitBuT

| | % d'extraction | |
|---|---|---|
| | DitBuT | DNT |
| Sol Gel 2a | 0 | 30 |
| Sol-gel 2b | 0 | 37 |

Tableau 3 : extraction compétitive DNT/C10

| | % d'extraction | |
|---|---|---|
| | C10 | DNT |
| Sol Gel 2a | 0 | 30 |
| Sol-gel 2b | 0 | 32 |

Tableau 4 : extraction compétitive DNT/NBz

| | % d'extraction | |
|---|---|---|
| | NBz | DNT |
| Sol Gel 2a | 9 | 46 |
| Sol-gel 2b | 12 | 47 |

Tableau 5 : extraction compétitive DNT/4NBiPh

| | % d'extraction | |
|---|---|---|
| | 4NBiPh | DNT |
| Sol Gel 2a | 13 | 40 |
| Sol-gel 2b | 3 | 35 |

Tableau 6 : extraction compétitive DNT/4NBzBr

| | % d'extraction | |
|---|---|---|
| | 4NBzBr | DNT |
| Sol Gel 2a | 12 | 22 |
| Sol-gel 2b | 13 | 27 |

Tableau 7 : extraction compétitive DNT/5M2A

| | % d'extraction | |
|---|---|---|
| | 5M2A | DNT |
| Sol Gel 2a | 20 | 20 |
| Sol-gel 2b | 25 | 25 |

Tableau 8 : extraction compétitive DNT/DNB

| | % d'extraction | |
|---|---|---|
| | DNB | DNT |
| Sol Gel 2a | 30 | 21 |
| Sol-gel 2b | 28 | 19 |

Il apparaît clairement que le gel selon la présente invention est sélectif des composés DNB et DNT. Toutefois le composé 5M2A est aussi extrait en proportion similaire (légère sélectivité envers le DNT et le DNB) en raison de la présence du groupement éther qui peut interagir avec les groupements silanols résiduels du gel ou avec la fonction urée du monomère.

**Revendications**

**1.** Procédé de préparation par voie sol-gel d'un gel hybride organique-inorganique imprimé possédant au moins un complexant organique mettant en jeu des interactions de type $\pi$-$\pi$ et/ou $\pi$-n avec d'autres molécules organiques acceptrices d'électrons n ou $\pi$, **caractérisé en ce qu'**il comprend

a) la polymérisation par polycondensation, en présence d'eau, d'au moins un alcoxyde métallique fonctionnalisé de formule (I), en présence d'un alcoxyde métallique choisi parmi les alcoxydes métalliques de formule (II) ou les alcoxydes métalliques fonctionnalisés de formule (III) ou leurs mélanges :

$$L\text{-}(CH_2)_{x}\text{-}M(OR^1)_n \quad (I)$$

$$M(OR^2)_m \quad (II)$$

$$(R^3)_yM(OR^2)_z \quad (III)$$

dans lesquelles soit M est identique dans chacune des formules I, II et III et représente Si, Ti, Zr ou Al, avantageusement Si, soit M représente Si ou Al dans chacune des formules I, II et III,
n=3 lorsque M représente Si, Ti ou Zr ou n=2 lorsque M représente Al,
m=4 lorsque M représente Si, Ti ou Zr ou m=3 lorsque M représente Al,
y+z=4 et z est au moins égal à 2 lorsque M représente Si, Ti ou Zr ou y+z=3 et z est au moins égal à 2 lorsque M représente Al,
$R^1$ et $R^2$ représentent indépendamment l'un de l'autre un groupe alkyle en $C_1$-$C_{12}$, avantageusement un groupe méthyle et/ou éthyle,
$R^3$ représente un groupe alkyle en $C_1$-$C_{12}$, un groupe aryle ou arylalkyle, avantageusement un groupe méthyle,
x= 0 à 12, de préférence, x = 3,
L représente un groupe organique comprenant au moins une fonction organique complexante pouvant former des interactions de type π-π et/ou π-n avec d'autres molécules organiques acceptrices d'électrons n ou π,
et en présence d'un gabarit constitué par une molécule organique acceptrice d'électrons n ou π et pouvant former un complexe avec la fonction organique complexante du groupe organique L,
le rapport de la concentration en composé de formule (I) / la concentration en composés de formules (II) et (III) est d'au plus 1/5, avantageusement d'environ 1/50,
b) lavage du gel hybride obtenu à l'étape a) afin de supprimer le gabarit.

**2.** Procédé selon la revendication 1 **caractérisé en ce que** la fonction organique complexante du groupe organique L est une fonction poly ou mono-aromatiques substituées par un ou plusieurs groupements donneurs d'électrons.

**3.** Procédé selon la revendication 2 **caractérisé en ce que** le groupe L est choisi dans le groupe constitué par l'indole, le carbazole, le pyrrole, l'acridine, la quinoline, l'anthracène, le benzothiophène, le dibenzothiophène, le groupe de formule

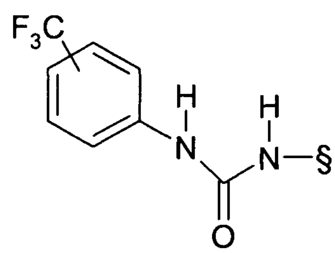

ou leur mélange.

**4.** Procédé selon la revendication 3 **caractérisé en ce que** l'alcoxyde métallique fonctionnalisé de formule (I) est choisi dans le groupe constitué par

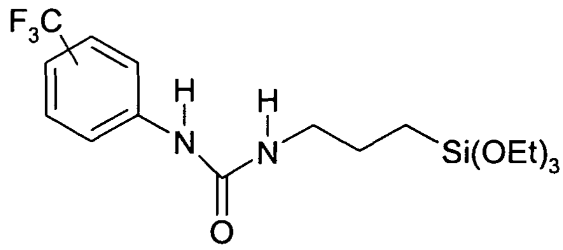

,

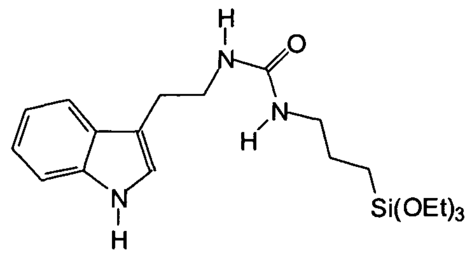

et

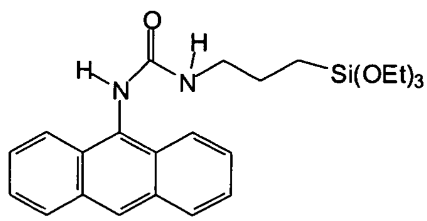

5. Procédé selon l'une quelconque des revendications précédentes **caractérisé en ce que** le gabarit est choisit dans le groupe constitué par le DNT ou le DNB.

6. Procédé selon l'une quelconque des revendications précédentes **caractérisé en ce que** le groupe de formule II est le TMOS et le groupe de formule III est le MeTMOS.

7. Gel hybride organique- inorganique imprimé, possédant au moins un complexant organique mettant en jeu des interactions de type π-π et/ou π-n avec d'autres molécules organiques acceptrices d'électrons n ou π, susceptible d'être obtenu par le procédé selon l'une quelconque des revendications 1 à 6.

8. Utilisation du gel hybride organique- inorganique imprimé selon la revendication 7 pour la séparation, l'extraction ou la détection d'espèces chimiques comportant des groupements accepteurs d'électrons n ou π, avantageusement choisies dans le groupe constitué par le DNT ou le DNB.

9. Utilisation selon la revendication 8 **caractérisé en ce qu'**il s'agit d'une extraction en phase liquide ou gazeuse.

10. Utilisation selon la revendication 9 **caractérisé en ce que** l'espèce chimique extraite est relargée en vue de sa caractérisation.

Office européen des brevets

# RAPPORT DE RECHERCHE EUROPEENNE

Numéro de la demande
EP 05 29 0311

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | FR 2 770 153 A (COMMISSARIAT ENERGIE ATOMIQUE) 30 avril 1999 (1999-04-30)<br>* le document en entier *<br>----- | 1-10 | B01J20/10<br>B01D15/00<br>B01J20/26<br>B01J20/28<br>B01J20/30 |
| D,A | US 6 057 377 A (BRINKER C JEFFREY ET AL) 2 mai 2000 (2000-05-02)<br>* le document en entier *<br>----- | 1-10 | |
| A | EP 0 619 141 A (STUDIENGESELLSCHAFT KOHLE MBH) 12 octobre 1994 (1994-10-12)<br>* le document en entier *<br>----- | 1-10 | |

DOMAINES TECHNIQUES RECHERCHES (Int.Cl.7)
B01J
B01D

Le présent rapport a été établi pour toutes les revendications

1

| Lieu de la recherche | Date d'achèvement de la recherche | Examinateur |
|---|---|---|
| La Haye | 11 avril 2005 | Schoofs, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................................................
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 05 29 0311

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-04-2005

| Document brevet cité au rapport de recherche | Date de publication | Membre(s) de la famille de brevet(s) | Date de publication |
|---|---|---|---|
| FR 2770153 A | 30-04-1999 | FR 2770153 A1 | 30-04-1999 |
| | | WO 9921654 A1 | 06-05-1999 |
| | | GB 2349347 A ,B | 01-11-2000 |
| | | JP 2001520932 T | 06-11-2001 |
| | | RU 2207190 C2 | 27-06-2003 |
| | | US 6667016 B1 | 23-12-2003 |
| US 6057377 A | 02-05-2000 | AUCUN | |
| EP 0619141 A | 12-10-1994 | DE 4309660 A1 | 29-09-1994 |
| | | CA 2119845 A1 | 26-09-1994 |
| | | EP 0619141 A1 | 12-10-1994 |
| | | JP 6320012 A | 22-11-1994 |

EPO FORM P0460

Pour tout renseignement concernant cette annexe : voir Journal Officiel de l'Office européen des brevets, No.12/82